# EUROPEAN PATENT APPLICATION

(11) **EP 4 541 570 A1**
(43) Date of publication of application: **23.04.2025**
(21) Application number: 23823277.1
(22) Date of filing: 16.06.2023
(51) Int. Cl.: B29D 30/32, B29D 30/24, B29D 30/26

(54) **TIRE BUILDING METHOD AND MECHANICAL DRUM**

(30) Priority: 17.06.2022 CN 202210690247
(71) Applicant: Mesnac Co., Ltd., Qingdao, Shandong 266042 (CN); Qingdao Mesnac Machinery & Electric Engineering Co., Ltd., Jiaozhou Qingdao, Shandong 266300 (CN)
(72) Inventor: LI, Xingrui, Qingdao, Shandong 266042 (CN); YU, Yihang, Qingdao, Shandong 266042 (CN); YANG, Yu, Qingdao, Shandong 266042 (CN); WANG, Fulin, Qingdao, Shandong 266042 (CN); ZHANG, Lei, Qingdao, Shandong 266042 (CN)
(74) Representative: Winter, Brandl - Partnerschaft mbB
(86) International application number: PCT/CN2023/100836
(87) International publication number: WO 2023/241711

(57) **Abstract**

The present disclosure provides a tire building method and a mechanical drum. The tire building method includes: controlling a attaching mechanism to roll a bead filler to attach the bead filler on a carcass of the tire; while attaching the bead filler or during a process of attaching the bead filler, controlling a turn-up mechanism to support a sidewall of a tire; and after the bead filler is attached, controlling the turn-up mechanism to roll the sidewall of the tire. The tire building method according to the present disclosure solves problems of long time of building the tire and low efficiency of building the tire in the related art.

## Description

### CROSS-REFERENCE TO RELATED APPLICATION

The present disclosure claims a priority from Chinese patent application No. 202210690247.5 entitled "TIRE BUILDING METHOD AND MECHANICAL DRUM", which is filed with CNIPA on June 17, 2022, and the entire contents of which are incorporated herein by reference.

### TECHNICAL FIELD

The present disclosure relates to the field of rubber tires, and in particular to a tire building method and a mechanical drum.

### BACKGROUND

When the existing tires are turned-up built, they are mainly divided into mechanical drums and capsule drums based on the manner of attaching the sidewalls of tires. When the capsule drum is used to turn up the sidewalls of tires, the capsule is inflated to attach the sidewalls to the sides of a carcass of the tire, which can avoid a problem of indentations on the tire sides. However, the capsule drum has problems of cumbersome capsule replacement, high capsule cost, and poor tire bead building quality compared with the mechanical drum, resulting in a high defective tire rate and high costs.

For mechanical drums, although their cost is low, they take a long time to roll tires, which is not conducive to large-scale production. Therefore, compared with capsule drums, even though their cost is low, they are rarely used.

### SUMMARY

The main purpose of the present disclosure is to provide a method for building a tire and a mechanical drum, so as to solve problems of long tire building time and low building efficiency in the related art.

In order to achieve the above-mentioned purpose, in an embodiment of the present disclosure, a method for building a tire is provided, which includes: controlling a attaching mechanism to roll a bead filler to attach the bead filler on a carcass of the tire; before or when attaching the bead filler, controlling a turn-up mechanism to support a sidewall of a tire; and after the bead filler is attached, controlling the turn-up mechanism to roll the sidewall of the tire.

In an embodiment of the present disclosure, after the bead filler is attached, the attaching mechanism is controlled to move to roll and attach the sidewall to the carcass of the tire.

In an embodiment of the present disclosure, the attaching mechanism rolls the sidewalls on both sides of the tire simultaneously through two suspension arms.

In an embodiment of the present disclosure, the turn-up mechanism is first controlled to roll the sidewall of the tire, and after the turn-up mechanism has finished rolling, the attaching mechanism is controlled to roll the sidewall of the tire.

In an embodiment of the present disclosure, when the turn-up mechanism rolls the sidewall, a first turn-up structure of the turn-up mechanism first moves from inside to outside along a radial direction of the tire to roll the sidewall, and then the first turn-up structure moves from outside to inside along the radial direction of the tire to roll the sidewall.

In an embodiment of the present disclosure, a pressure roller assembly within the first turn-up structure is driven to move in the radial direction of the tire by the first drive assembly within the first turn-up structure.

In an embodiment of the present disclosure, a second driving assembly within the first turn-up structure drives the pressure roller assembly in the first turn-up structure to press the sidewall, so that the pressure roller assembly always abuts against the sidewall while moving along the radial direction of the tire.

In another embodiment of the present disclosure, a mechanical drum is provided, the mechanical drum is configured to perform the above-mentioned method for building a tire, and the mechanical drum includes: a spindle assembly being rotationally arranged to drive the tire to rotate; a turn-up mechanism being arranged on the spindle assembly to roll and attach the sidewall of the tire to the side of the carcass of the tire; and an attaching mechanism movably arranged on a side of the spindle assembly to attach the bead filler and/or the sidewall to the carcass of the tire.

In an embodiment of the present disclosure, the turn-up mechanism includes: a plurality of first turn-up structures circumferentially arranged around the spindle assembly, and the first turn-up structure includes: a pressure roller assembly configured to roll the sidewall of the tire; a first drive rod assembly drivingly connected to the pressure roller assembly; a first drive assembly connected to the first drive rod assembly to move the pressure roller assembly in the radial direction of the tire through the first drive rod assembly; a second drive rod assembly rotationally connected to the first drive rod assembly; a second drive assembly drivingly connected to the second drive rod assembly to drive the pressure roller assembly to press the tire through the first drive rod assembly; and a support assembly connected to the first drive rod assembly to support the sidewall on the outside of the turn-up mechanism.

In an embodiment of the present disclosure, the first turn-up structure further includes: a capsule arranged on the support assembly to bulge toward the outside of the turn-up structure and support the sidewall in an inflated state.

According to the method for building a tire using the technical solution of the present disclosure, a part of the work of the turn-up process and the bead filler attaching process is performed simultaneously, thereby shortening the time of the entire tire building. At the same time, in order to avoid motion interference between the two processes, the mechanical drum described below improves the structure to meet the requirements of performing a part of the work of the above two processes simultaneously. In addition, in order to reduce the time of the turn-up mechanism rolling the sidewall and improve the attaching quality and attaching efficiency of the sidewall, the method for building a tire according to the present disclosure adds a function of pre-supporting the sidewall. Alternatively, during the process of controlling the attaching mechanism to roll the bead filler to attach the bead filler to the carcass of the tire, the turn-up mechanism is synchronously controlled to support the sidewall so that the sidewall gathers toward the side surface of the carcass of the tire, causing deformation of the sidewall toward the side surface of the carcass of the tire in advance. After the turn-up mechanism is rolled, the sidewall pre-embroidery can be attach more closely. After the bead filler is attached, the turn-up mechanism is controlled to roll the sidewall of the tire. At this time, the pressure roller assembly of the turn-up mechanism can quickly roll the sidewall, and the sidewall can have a good match with the carcass. The efficiency of tire building is improved.

### BRIEF DESCRIPTION OF THE DRAWINGS

In order to more clearly illustrate the embodiments of the present disclosure or the technical solutions of the prior art, the drawings required for use in the embodiments or the description of the prior art will be briefly described below. Obviously, the drawings described below are only some embodiments of the present disclosure. For those skilled in the art, other drawings may be acquired based on these drawings without paying any creative work:
Fig.1 is a partial structural schematic diagram of an embodiment of a mechanical drum according to the present disclosure.
Fig.2 is a schematic diagram showing a turn-up mechanism of a mechanical drum when a turn-up operation is not performed according to the present disclosure.
Fig.3 is a schematic diagram showing a turn-up mechanism of a mechanical drum when pre-supporting the sidewall according to the present disclosure.
Fig.4 is a schematic diagram showing a turn-up mechanism of a mechanical drum rolling a sidewall of a tire during a turn-up operation according to an embodiment of the present disclosure.
In the figure, 10 Spindle assembly; 20, First turn-up structure; 201, Pressure roller assembly; 21, First drive rod assembly; 211, First drive assembly; 22, Second drive rod assembly; 221, Second drive assembly; 23, Third drive rod; 24, Fourth drive rod; 25, Support assembly; 30, Attaching mechanism; 40, Locking ring structure; 50, Sidewall.

### DETAILED DESCRIPTION

It should be noted that, in the absence of conflict, the embodiments and features in the embodiments of the present disclosure may be combined with each other. The present disclosure will be described in detail below with reference to the accompanying drawings and in combination with embodiments.

In order to solve problems of long tire building time and low building efficiency in the related art, the present disclosure provides a method for building a tire and a mechanical drum.

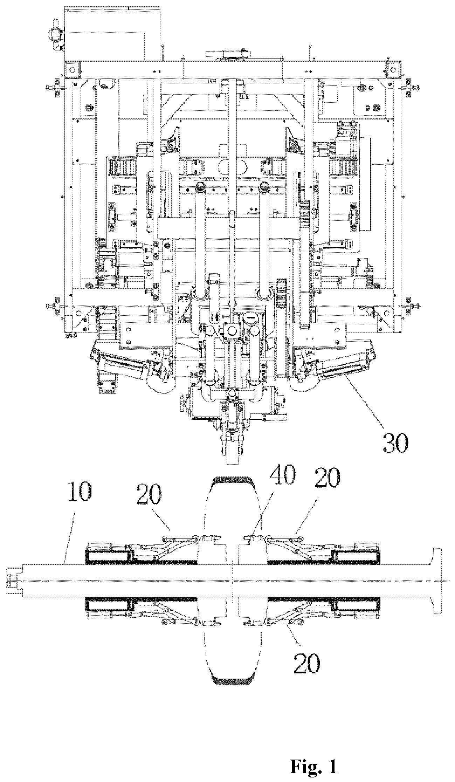

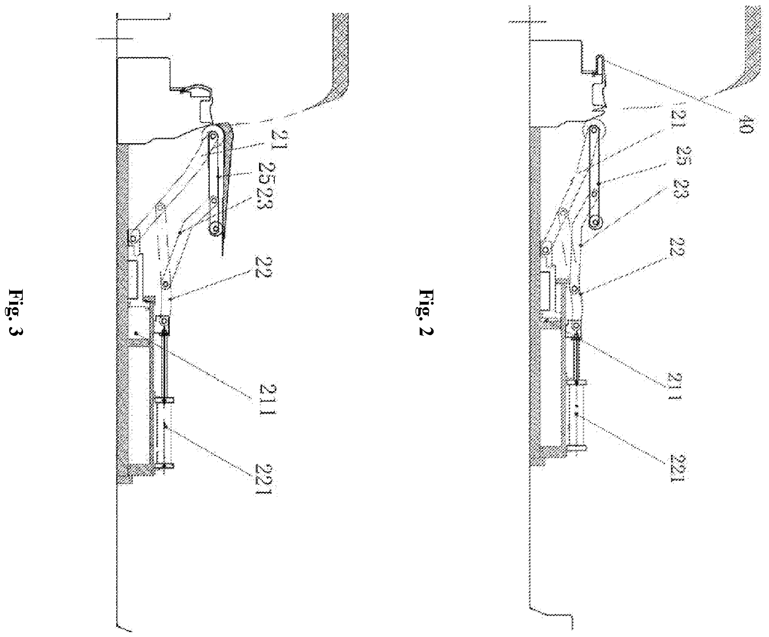

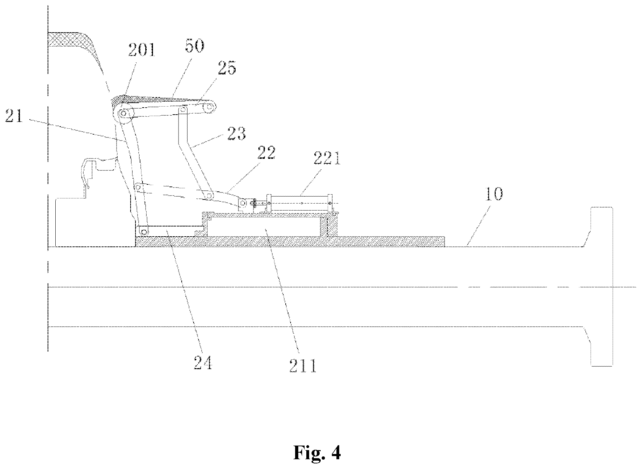

Referring to Figs. 1 to 4, in a method for building a tire according to the present disclosure, a sidewall is supported before the bead filler is attached to ensure that the sidewall can be well attached to a carcass of a tire in a shorter time during the subsequent rolling, thereby shortening the entire tire building time. At the same time, in order to avoid motion interference between the two processes, the mechanical drum described below improves the structure to meet the requirements of performing part of the two processes simultaneously. In addition, in order to reduce the time of the turn-up mechanism rolling the sidewall and improve the sidewall attaching quality and attaching efficiency, the method for building a tire according to the present disclosure increases a function of pre-supporting the sidewall. Alternatively, during the process of controlling the attaching mechanism 30 to roll the bead filler to attach the bead filler on the carcass of the tire, the turn-up mechanism is synchronously controlled to support the sidewall so that the sidewall gathers toward a side surface of the carcass of the tire, so that the sidewall is deformed toward the side surface of the carcass of the tire in advance, and the subsequent rolling of the turn-up mechanism can make the sidewall and the pre- carcass of the tire attach more closely. After the bead filler is attached, the turn-up mechanism is controlled to roll the sidewall of the tire. At this time, the pressure roller assembly of the turn-up mechanism can quickly roll the sidewall, and the sidewall can produce a good match with the carcass of the tire, thereby improving the efficiency of tire building.

According to the present disclosure, in addition to using a turn-up mechanism to turn up the sidewall, the attaching mechanism 30 is also controlled to move to roll the sidewall after the bead filler is attached, so as to attach the sidewall to the carcass of the tire. During a specific operation, the attaching mechanism and the turn-up mechanism roll the sidewall respectively, and the attaching mechanism and the turn-up mechanism can roll the entire sidewall in different time periods to improve the attaching quality of the sidewall.

In order to achieve the purpose of enabling the attaching mechanism 30 to roll the sidewalls on both sides of the tire at the same time, the attaching mechanism 30 is symmetrically provided with two suspension arms, on which turn-up pressure rollers are provided. The two turn-up pressure rollers move synchronously and can approach the spindle assembly or move away from the spindle assembly 10 at the same time; in addition, the two suspension arms may also move towards or away from each other at the same time. When the attaching mechanism 30 rolls the side surface of the tire, the two suspension arms approach each other to press the sidewalls against the side surface of the carcass of the tire, so as to roll the sidewalls on both sides of the tire at the same time.

In order to avoid motion interference between the turn-up mechanism and the attaching mechanism when rolling the sidewall, an embodiment of the present disclosure adopts an implementation manner that the turn-up mechanism is first controlled to roll the sidewall, and after the turn-up mechanism finishes rolling, the attaching mechanism 30 is controlled to roll the sidewall. Alternatively, the mechanical drum of the present disclosure is further provided with a detection component, and the detection component includes two symmetrically arranged detection switches, and the detection switch is configured to detect a position of the first turn-up structure. When the first turn-up structure falls back to an initial position along a radial direction of the tire, the detection switch detects a signal. At this time, the spindle assembly rotates at a high speed to throw up the sidewall, and the two suspension arms of the attaching mechanism approach each other to an innermost position of the side surface of the tire body and turn up the sidewall for the second time.

In order to improve the attaching quality of the turn-up mechanism when rolling the sidewall, according to the present disclosure, the turn-up mechanism is controlled to roll the sidewall in a two-step manner. Alternatively, when the turn-up mechanism rolls the sidewall, the first turn-up structure 20 of the turn-up mechanism is first moved from the inside to the outside along the radial direction of the tire to roll the sidewall, and then the first turn-up structure 20 is moved from the outside to the inside along the radial direction of the tire to roll the sidewall, thereby achieving rolling on both sides through an optimal path.

In order to avoid motion interference between the attaching mechanism and the turn-up mechanism, the mechanical drum according to the present disclosure arranges the attaching mechanism on the outside of the spindle assembly, and the turn-up mechanism is located on the spindle assembly. During the turn-up operation, the first turn-up structure 20 moves from the outside to the inside along the radial direction of the tire. After the movement of the first turn-up structure is completed, the attaching mechanism 30 is driven to roll the sidewall from the outside to the inside along the radial direction of the tire, thereby realizing a front-and-rear rolling.

The pressure roller assembly 201 in the first turn-up structure 20 is driven to move in the radial direction of the tire by the first driving assembly 211 in the first turn-up structure 20. The pressure roller assembly is in rolling contact with the sidewall, which effectively reduces friction and reduces damage to the sidewall.

The pressure roller assembly 201 in the first turn-up structure 20 is driven by the second driving assembly 221 in the first turn-up structure 20 to press the sidewall, so that the pressure roller assembly 201 always abuts against the sidewall while moving along the radial direction of the tire.

In order to cooperate with the implementation of the above method, the present disclosure further provides a specific arrangement of a mechanical drum structure to realize the above method for building a tire. The mechanical drum includes a spindle assembly 10, a turn-up mechanism and an attaching mechanism 30. The spindle assembly 10 is rotationally arranged to drive the tire to rotate; the spindle assembly adopts a hollow shaft, which can drive the turn-up mechanism and the carcass of the tire to rotate, and the turn-up mechanism is arranged on the spindle assembly 10 to roll and attach the sidewall of the tire to the side surface of the carcass of the tire; the attaching mechanism 30 is movably arranged on one side of the spindle assembly 10 to attach the bead filler and/or the sidewall to the carcass of the tire.

Referring to Figs. 1 to 2, the turn-up mechanism according to the present disclosure is arranged on the spindle assembly 10, and is mainly configured to turn up the tire after the tire bead is installed, so that the sidewall 50 is attached to the side of the carcass of the tire. The mechanical drum is configured to replace the capsule turn-up, and the turn-up mechanism is more stable by improving the structure of the mechanical drum turn-up, and can attach the sidewall 50 on the tire blank with high quality, and greatly shorten the time of tire turn-up, thereby improving production efficiency. The specific arrangement are as follows.

The turn-up mechanism according to the present disclosure includes a plurality of first turn-up structures 20, the plurality of first turn-up structures 20 are arranged circumferentially around the spindle assembly. The first turn-up structure 20 includes a pressure roller assembly 201, a first drive rod assembly, a first drive assembly 211, a second drive rod assembly 22, a second drive assembly 221, and a support assembly 25. The pressure roller assembly 201 is configured to roll the sidewall 50 of the tire; the pressure roller assembly 201 is configured to directly abut against the sidewall 50 to roll the sidewall 50 of the tire, thereby pressing the sidewall 50 against the carcass of the tire; the first drive rod assembly 21 is drivingly connected to the pressure roller assembly 201, and the first drive assembly 211 is connected to the first drive rod assembly 21, so as to swing the first drive rod assembly 21 to move the pressure roller assembly 201 in the radial direction of the tire. The second drive rod assembly 22 is rotationally connected to the first drive rod assembly 21, and the second driving assembly 221 is drivingly connected to the second drive rod assembly 22, so as to drive the pressure roller assembly 201 to press the tire through the first drive rod assembly 21.

In order to shorten the time for the pressure roller assembly 201 to roll the sidewall 50, the support assembly 25 is connected to the first drive rod assembly to support the sidewall 50 on the outside of the turn-up mechanism; after being raised, the support assembly 25 is perpendicular to the sidewall 50 of the tire or is inclined toward the outside of the tire at one end away from the tire, and the capsule is arranged on the support assembly 25 to bulge toward the outside of the turn-up mechanism in an inflated state and support the sidewall 50. By pre-supporting the sidewall 50 before rolling, not only the rolling time of the subsequent pressure roller assembly 201 is saved, but also the sidewall 50 pressed by the roller on the pressure roller assembly 201 can be effectively prevented from sticking to the carcass of the tire.

The first drive rod assembly includes a fourth drive rod 24, a first drive rod and a third drive rod 23, one end of the fourth drive rod 24 is connected to the first driving assembly 211; the first drive rod is rotationally connected to the other end of the fourth drive rod 24; one end of the third drive rod 23 is rotationally connected to an end of the support assembly 25 away from the pressure roller assembly 201, and the other end of the third drive rod 23 is further rotationally connected to the fourth drive rod 24, where the fourth drive rod 24, the support assembly 25 of the first drive rod and the third drive rod 23 are connected in sequence to form a four-bar linkage.

There are various connection modes between the second drive rod assembly 22 and the first drive rod assembly, including: the second drive rod assembly 22 being rotationally connected to the first drive rod or the second drive rod assembly 22 being rotationally connected to the third drive rod 23.

In addition, the mechanical drum according to the present disclosure further includes a locking ring structure 40. There are two locking ring structures 40, which are symmetrically arranged on the spindle assembly and located between the two turn-up mechanisms, and are configured to lock the tire bead, thereby fixing the carcass of the tire.

It should be noted that the terms used herein are only for describing specific embodiments and are not intended to limit the exemplary embodiments according to the present disclosure. As used herein, unless the context clearly indicates otherwise, the singular forms are intended to include the plural forms. In addition, it should be understood that when the terms "including" and/or "comprising" are used in this description, they indicate the presence of features, steps, operations, devices, components and/or their combinations.

Unless specifically stated otherwise, the relative arrangement of components and steps, the numerical expressions and numerical values set forth in these embodiments do not limit the scope of the present disclosure. At the same time, it should be understood that for the convenience of description, the sizes of the various parts shown in the drawings are not drawn based on the actual proportional relationship. Technologies, methods and equipment known to ordinary technicians in the relevant field may not be discussed in detail, but where appropriate, the technologies, methods and equipment should be considered part of the authorization description. In all examples shown and discussed herein, any specific values should be interpreted as merely exemplary and not as limiting. Therefore, other examples of the exemplary embodiments may have different values. It should be noted that similar reference numerals and letters refer to similar items in the following figures, and therefore, once an item is defined in one figure, it need not be further discussed in subsequent figures.

For ease of description, spatially relative terms, such as "on", "above", "on the upper surface of", "upper", etc., may be used here to describe the spatial position relationship between a device or feature and other devices or features as shown in the figures. It will be understood that the spatially relative terms are intended to encompass different orientations of the device in use or operation in addition to the orientation depicted in the figures. For example, if a device in the drawings is turned over, a device described as "above the other devices or structures" or "on the other devices or structures" would then be oriented as "below the other devices or structures" or "under the other devices or structures". Thus, the exemplary term "above" can encompass both an orientation of above and below. The device may be otherwise oriented (rotated 90 degrees or at other orientations) and the spatially relative descriptors used herein interpreted accordingly.

The above description is only a preferred embodiment of the present disclosure and is not intended to limit the present disclosure. For those skilled in the art, the present disclosure may have various modifications and changes. Any modifications, equivalent substitutions, improvements, etc. made within the spirit and principles of the present disclosure should be included in the protection scope of the present disclosure

## Claims

1. A method for building a tire, **characterized by** comprising:
controlling a attaching mechanism (30) to roll a bead filler to attach the bead filler on a carcass of the tire;
before or when attaching the bead filler, controlling a turn-up mechanism to support a sidewall (50) of a tire; and
after the bead filler is attached, controlling the turn-up mechanism to roll the sidewall (50) of the tire.

2. The method for building the tire of claim 1, **characterized in that** after the bead filler is attached, the attaching mechanism (30) is controlled to move to roll and attach the sidewall (50) to the carcass of the tire.

3. The method for building the tire of claim 2, **characterized in that** the attaching mechanism (30) rolls the sidewalls (50) on both sides of the tire simultaneously through two suspension arms.

4. The method for building the tire of claim 2, **characterized in that** the turn-up mechanism is first controlled to roll the tire sidewall (50), and after the turn-up mechanism has finished rolling, the attaching mechanism (30) is controlled to roll the sidewall (50) of the tire.

5. The method for building the tire of claim 1, **characterized in that** when the turn-up mechanism rolls the sidewall (50), a first turn-up structure (20) of the turn-up mechanism first moves from inside to outside along a radial direction of the tire to roll the sidewall (50), and then the first turn-up structure (20) moves from outside to inside along the radial direction of the tire to roll the sidewall (50).

6. The method for building the tire of claim 5, **characterized in that** a pressure roller assembly (201) within the first turn-up structure (20) is driven to move in the radial direction of the tire by the first drive assembly (211) within the first turn-up structure (20).

7. The method for building the tire of claim 6, **characterized in that** a second driving assembly (211) within the first turn-up structure (20) drives the pressure roller assembly (201) in the first turn-up structure (20) to press the sidewall (50), so that the pressure roller assembly (201) always abuts against the sidewall (50) while moving along the radial direction of the tire.

8. A mechanical drum, **characterized in that** the mechanical drum is configured to perform the method for building the tire of any one of claims 1-6, and the mechanical drum comprises:
a spindle assembly (10) being rotationally arranged to drive the tire to rotate;
a turn-up mechanism being arranged on the spindle assembly (10) to roll and fit the sidewall of the tire to the side of the carcass of the tire; and
a attaching mechanism (30) movably arranged on a side of the spindle assembly (10) to attach the bead filler and/or the sidewall (50) to the carcass of the tire.

9. The mechanical drum of claim 8, **characterized in that** the turn-up mechanism comprises: a plurality of first turn-up structures (20) circumferentially arranged around the spindle assembly (10), and the first turn-up structure comprises:
a pressure roller assembly (201) configured to roll the sidewall (50) of the tire;
a first drive rod assembly (21) drivingly connected to the pressure roller assembly (201), and
a first drive assembly (211) connected to the first drive rod assembly (21) to drive the pressure roller assembly (201) to move in the radial direction of the tire through the first drive rod assembly (21);
a second drive rod assembly (22) rotationally connected to the first drive rod assembly (21);
a second drive assembly (221) drivingly connected to the second drive rod assembly (22) to drive the pressure roller assembly (201) to press the tire through the first drive rod assembly (21); and
a support assembly (25) connected to the first drive rod assembly (21) to support the sidewall on the outside of the turn-up mechanism (50).

10. The mechanical drum of claim 9, **characterized in that** the first turn-up structure further comprises:
a capsule arranged on the support assembly (25) to bulge toward the outside of the turn-up structure and support the sidewall (50) in an inflated state.
